# EUROPÄISCHE PATENTANMELDUNG

(11) **EP 1 199 445 A1**
(43) Veröffentlichungstag der Anmeldung: **24.04.2002**
(21) Anmeldenummer: 00122602.6
(22) Anmeldetag: 17.10.2000
(51) Int. Cl.: F01K 23/10, F02C 7/224

(54) **Vorrichtung und Verfahren zur Brennstoffvorwärmung in kombinierten Gas- und Dampfturbinenanlagen**

(71) Anmelder: SIEMENS AKTIENGESELLSCHAFT, 80333 München (DE)
(72) Erfinder: Schmid, Erich, 91080 Marloffstein (DE); Schoettler, Michael, Dr., 91052 Erlangen (DE)

(57) **Zusammenfassung**

Um eine Vorrichtung zur Brennstoffvorwärmung in kombinierten Gas- und Dampfturbinenanlagen, mit zumindest einem Dampferzeuger (5, 6, 7) zu Erwärmung, Verdampfung und Überhitzung von Speisewasser, der einen Speisewasservorwärmer (15, 16, 43, 51), einen Verdampfer (8, 9, 10) und einen Überhitzer (11, 12, 13) aufweist, wobei zumindest ein Teil des erhitzten Speisewassers zur Vorwärmung von Brennstoff in einem Brennstoffvorwärmer einsetzbar ist, der durch eine Speisewasserzuleitung (35, 36, 37, 56, 58, 60, 73) mit Speisewasser mit einer vorbestimmten Temperatur versorgbar ist, und nach dem Erwärmen des Brennstoffs das abgekühlte Speisewasser mittels einer Speisewasserableitung (57, 59, 61, 74) ableitbar ist, so auszubilden, daß sie in unterschiedlichen Gasturbinenanlagen einsetzbar ist, sowie in ihrer Heizleistung an einen vorbestimmten Brennstoffvorwärmbedarf schnell und kostengünstig anpaßbar ist, erfolgt die Brennstoffvorwärmung in bedarfsweise einzeln zuschaltbaren Brennstoffvorwärmstufen (48, 49, 50), durch welche der Brennstoff nacheinander leitbar ist.

## Beschreibung

Die Erfindung betrifft eine Vorrichtung zur Brennstoffvorwärmung in kombinierten Gas- und Dampfturbinenanlagen, mit zumindest einem Dampferzeuger zur Erwärmung, Verdampfung und Überhitzung von Speisewasser, der einen Speisewasservorwärmer oder Kondensatvorwärmer, einen Verdampfer und einen Überhitzer aufweist, wobei zumindest ein Teil des erhitzten Speisewassers zur Vorwärmung von Brennstoff einsetzbar ist und der Brennstoffvorwärmer durch eine Speisewasserzuleitung mit Speisewasser mit einer vorbestimmten Temperatur versorgbar ist, und nach dem Erwärmen des Brennstoffs das abgekühlte Speisewasser mittels einer Speisewasserableitung ableitbar ist.

Zur Bereitstellung von Dampf zum Antreiben einer Dampfturbine wird Speisewasser aufgeheizt, verdampft und unter hohen Druck überhitzt. Dies erfolgt in der Regel in mehreren Dampferzeugerstufen, in der Regel einer Niederdruckdampferzeugerstufe, einer Mitteldruckdampferzeugerstufe und einer Hochdruckdampferzeugerstufe. Die Dampferzeugerstufen bestehen aus einem Speisewasservorwärmer oder Kondensatvorwärmer, in dem das Speisewasser, das von einer Speisewasserpumpe zugeführt wird, vor Eintritt in eine der jeweiligen Druckstufe zugeordneten Trommel auf Siedetemperatur erwärmt und z.T. auch verdampft wird, einem an die jeweilige Trommel angeschlossenen Verdampfer, in dem Sattdampf erzeugt wird, und einem an den Dampfbereich der Trommel angeschlossenen Überhitzer zur Zuführung von Wärme zum Sattdampf ohne Steigerung des Drucks des Sattdampfes, der dann anschließend zu einer dem jeweiligen Dampfdruck entsprechenden Teil der Dampfturbine (Nieder-, Mittel- und Hochdruckturbinenteil) geleitet wird. Die Wärmeversorgung der Dampferzeugerstufen erfolgt bei einer kombinierten Gas-/Dampfturbinenanlage durch die heißen Abgase einer Gasturbine. In der Mitteldruckdampferzeugerstufe wird zusätzlich der aus dem Hochdruckturbinenteil gewonnene Abdampf wiederum dem überhitzten Mitteldruckdampf zugemischt und in einem Zwischenüberhitzer noch einmal aufgeheizt, um anschließend dem Mitteldruckturbinenteil zugeführt zu werden. Alternativ zur Zuleitung zum entsprechenden Dampfturbinenteil kann der Dampf auch in einen Dampfturbinenkondensator geleitet werden, von wo aus sich der Wasser/Dampfkreislauf schließt, indem eine Kondensatpumpe das sich im Kondensator bildende Kondensat wieder zum Kondensatvorwärmer pumpt. Zur Bereitstellung von Energie zur Erzeugung von Gas für die Gasturbine oder von zusätzlicher Wärme für die Dampferzeuger der Dampfturbine in einer kombinierten Gas-/Dampfturbinenanlage wird Brennstoff, zum Beispiel Erdgas, verbrannt. Um diese Verbrennung effektiv zu gestalten, wird der Brennstoff vorher erwärmt. Die Vorwärmung des Brennstoffs erfolgt mittels eines Brennstoffvorwärmers. Hierzu wird beispielsweise ein Teil des bereits erhitzten Mitteldruckspeisewassers nach dem Mitteldruckspeisewasservorwärmer vor Eintritt in die Mitteldrucktrommel abgezweigt, im Wärmetauscherverfahren an dem Brennstoff vorbeigeleitet und zwischen Kondensatpumpe und Kondensatvorwärmer wieder dem Wasser/Dampfkreislauf zugeleitet. Dabei erreicht der Brennstoff Temperaturen bis zu 200°C. Alternativ wird Mitteldruckspeisewasser schon vor Eintritt in den Mitteldruckspeisewasservorwärmer abgezweigt, wobei Brennstofftemperaturen von etwa 140-160°C erreicht werden.

Nachteilig hierbei ist, daß der Brennstoffvorwärmer eine hohe Druckauslegung haben muß, wodurch er gegenüber Temperaturänderungen empfindlich wird und teuer in der Herstellung und Wartung. Zudem kann selbst bei modernen Gasturbinenanlagen die mögliche Vorwärmung des Brennstoffs bis auf 200°C kaum ausgenutzt werden, da bei höherer Vorwärmung beispielsweise das Problem des sogenannten "Brennkammerbrummens", so daß die installierten, teuren Vorwärmsysteme bisher kaum eingesetzt werden können.

Aufgabe der vorliegenden Erfindung ist es daher, eine Vorrichtung zur Brennstoffvorwärmung der oben beschriebenen Art zu liefern, die in unterschiedlichen Gasturbinenanlagen einsetzbar ist, sowie in ihrer Heizleistung an einen vorbestimmten Brennstoffvorwärmbedarf schnell und kostengünstig anpaßbar ist.

Die Aufgabe wird dadurch gelöst, daß die Brennstoffvorwärmung in bedarfsweise einzeln zuschaltbaren Brennstoffvorwärmstufen erfolgt, durch die der Brennstoff nacheinander leitbar ist.

Durch eine derartige Vorrichtung ist ein hoher Standardisierungsgrad mit einem Wiederholungseffekt bei der Projektierung und Realisierung erreichbar. Durch den Aufbau aus einzelnen, nach Bedarf einsetzbaren Brennstoffvorwärmstufen lassen sich verschiedene Temperaturbereiche stufenweise einstellen, je nach Anordnung und Zahl der Brennstoffvorwärmstufen und deren Anschluß an den/die Dampferzeuger. Somit ist ein modularer Aufbau möglich, so daß die Vorrichtung für verschiedene Gas-/Dampfturbinenanlagen eingesetzt werden kann oder durch einfache Modifikationen anpaßbar ist (Moduleffekt).

Falls eine Brennstoffvorwärmung in einer ersten Stufe (zum Beispiel mit Kondensat-Rezirkulation) erfolgt, gilt: Eine vollständige Nutzung der Speisewassermenge zur Brennstoffvorwärmung wird erreicht, wenn der Speisewasservorwärmer aus zwei Teilen aufgebaut ist, die zum Abgas parallel geschaltet sind und die Brennstoffvorwärmstufe zwischen die Teile geschaltet ist, wobei die Speisewasserzuleitung von einem Ausgang des ersten Teils des Speisewasservorwärmers zur Brennstoffvorwärmstufe und die Speisewasserableitung von der Brennstoffvorwärmstufe zu einem Eingang des zweiten Teils des Speisewasservorwärmers führt. Bei dieser Vorrichtung durchläuft die gesamte Speisewassermenge zuerst einen Teil des Speisewasservorwärmers, wird aufgeheizt und durchströmt dann die Brennstoffvorwärmstufe, in der es die vorher aufgenommene Wärme ganz oder teilweise abgibt. Anschließend durchläuft das abgekühlte Speisewasser den zweiten Teil des Speisewasservorwärmers, in dem es wieder aufgeheizt wird. Es entstehen somit keine Verluste aufgrund von Drosselungen, die bei einem Abzweigen von Speisewasser erfolgen würden. Es sind nur geringere Pumpleistungen erforderlich. Es muß vorteilhafterweise keine zusätzliche Zirkulation von Speisewasser erfolgen. Der Wirkungsgrad der Brennstoffvorwärmstufe wird somit entsprechend hoch.

Eine bedarfsgerechte Anpassung an die gewünschte Temperatur des Brennstoffs bei der Brennstoffvorwärmung ist möglich, wenn eine Brennstoffvorwärmstufe einem Kondensatvorwärmer oder einem Mitteldruckspeisewasservorwärmer, oder einem Hochdruckspeisewasservorwärmer zugeordnet ist. Somit können die unterschiedlichen Druck- und Temperaturbereiche der Speisewasservorwärmstufen ohne zusätzliche Maßnahmen zugleich für die Brennstoffvorwärmung genutzt werden. Insbesondere können die verschiedenen Stufen je nach Heizbedarf miteinander kombiniert werden.

Eine besonders vorteilhafte Ausnutzung der Speisewasserenergie im Dampferzeuger ist gegeben, wenn drei Brennstoffvorwärmstufen vorgesehen sind, wobei eine erste Brennstoffvorwärmstufe einem Kondensatvorwärmer, eine zweite Brennstoffvorwärmstufe einem Mitteldruckspeisewasservorwärmer und eine dritte Brennstoffvorwärmstufe einem Hochdruckspeisewasservorwärmer zugeordnet ist. Der Brennstoff kann hierdurch schonend in Stufen auf eine sehr hohe Temperatur erwärmt werden. Zugleich ist lediglich eine an den jeweilig herrschenden Druck und die Temperatur angepaßte Auslegung der Brennstoffvorwärmstufe notwendig. Bei den niedrigeren Druckstufen ist somit eine weniger aufwendige Auslegung möglich, wodurch die Sicherheit nicht eingeschränkt wird und zudem Kosten gespart werden können.

Wenn die Speisewasserzuleitung einer Brennstoffvorwärmstufe an der Speisewasserpumpe nach dem Kondensatvorwärmer angesetzt ist und die Speisewasserableitung der Brennstoffvorwärmstufe vor den Kondensatvorwärmer führt, ist aufgrund des Drucks, der durch die Speisewasserpumpe ausgeübt wird, keine zusätzliche Kondensatrückführungspumpe notwendig.

Es ist keine Abdrosselung bis auf Niederdruckniveau, z.B. etwa 4-5 bar notwendig, wenn die Speisewasserzuleitung einer Brennstoffvorwärmstufe nach einem Speisewasservorwärmer angesetzt ist und die Speisewasserableitung der Brennstoffvorwärmstufe vor die Speisewasserpumpe führt.

Die Ausdampfungen sind gering, wenn die Speisewasserzuleitung einer Brennstoffvorwärmstufe zwischen Mitteldrucktrommel und Mitteldruckspeisewasservorwärmer angesetzt ist und die Speisewasserableitung der Brennstoffvorwärmstufe an die Niederdrucktrommel führt.

Wenn die erste und/oder die zweite und/oder die dritte Brennstoffvorwärmstufe jeweils zwischen den beiden Teilen des Kondensatvorwärmers und/oder den beiden Teilen des Mitteldruckspeisewasservorwärmers und/oder den beiden Teilen des Hochdruckspeisewasservorwärmers geschaltet sind, muß vorteilhafterweise kein zusätzliches Speisewasser zirkuliert werden.

Ein langsameres Anfahren mit einem geringeren Temperaturgradienten ist gewährleistet, wenn eine Zumischleitung beginnend zwischen der Kondensatpumpe und einer Absperrklappe zum Einlaß des Speisewassers in die Brennstoffvorwärmstufe führt. Die Menge des zugemischten, kühleren Speisewassers kann kontinuierlich eingestellt werden, wodurch die Temperaturen reguliert werden.

Ein geregeltes Anfahren im Mitteldruckbrennstoffvorwärmer ist gegeben, wenn eine Zumischleitung an einem Einlaß der Brennstoffvorwärmstufe mit einer Mitteldruckspeisewasserzuleitung angesetzt ist, wobei die Zumischleitung zwischen Speisepumpe und Mitteldruckspeisewasservorwärmer beginnt.

Ziel der Erfindung ist es weiterhin ein Verfahren zur Brennstoffvorwärmung in kombinierten Gas- und Dampfturbinenanlagen zu verbessern, wobei Speisewasser in zumindest einem Dampferzeuger in einem Speisewasservorwärmer oder Kondensatvorwärmer erwärmt, in einem Verdampfer verdampft und in einem Überhitzer überhitzt wird, wobei zumindest ein Teil des erhitzten Speisewassers zur Vorwärmung von Brennstoff in einem Brennstoffvorwärmer eingesetzt wird, der durch eine Speisewasserzuleitung mit Speisewasser mit einer vorbestimmten Temperatur versorgt wird, und nach dem Erwärmen des Brennstoffs das abgekühlte Speisewasser mittels jeweils einer Speisewasserableitung abgeleitet wird.

Aufgabe ist es daher ein Verfahren zur Brennstoffvorwärmung in kombinierten Gas- und Dampfturbinenanlagen zu liefern, das in unterschiedlichen Gasturbinenanlagen einsetzbar ist und bei dem die Heizleistung des Brennstoffvorwärmers an einen vorbestimmten Brennstoffvorwärmbedarf schnell und kostengünstig anpaßbar ist.

Die auf ein Verfahren gerichtete Aufgabe wird dadurch gelöst, daß die Brennstoffvorwärmung in bedarfsweise einzeln zuschaltbaren Brennstoffvorwärmstufen erfolgt, durch die der Brennstoff nacheinander geleitet wird. Durch das stufenweise Aufheizen des Brennstoffs ist eine flexible und nahezu optimale Einstellung der Brennstoffvorwärmtemperaturen auf die Erfordernisse der Anlagen möglich, die zugleich kostengünstig ist, weil nicht alle eingesetzten Komponenten allen Druck- und Temperaturanforderungen zugleich gerecht werden müssen, sondern nur den jeweils lokal wirklich herrschenden.

Wenn das Speisewasser zunächst durch einen Teil des Speisewasservorwärmers geleitet wird, anschließend zur Brennstoffvorwärmstufe, und durch einen zweiten Teil des Speisewasservorwärmers, wobei die beiden Teile zum Abgas parallel geschaltet sind, wird das Speisewasser zunächst direkt auf die gewünschte Temperatur aufgeheizt und anschließend kann die gesamte aufgeheizte Speisewassermenge zum Aufwärmen des Brennstoffes genutzt werden. Danach wird das abgekühlte Speisewasser im zweiten Teil des Speisewasservorwärmers wieder aufgeheizt. Es entstehen somit keine Druckverluste aufgrund von Drosselungen oder eventuelle Wärmeverluste durch langwieriges Umleiten.
Wenn durch eine erste Brennstoffvorwärmstufe Speisewasser aus einem Kondensatvorwärmer geleitet wird, durch eine zweite Brennstoffvorwärmstufe Speisewasser aus einem Mitteldruckspeisewasservorwärmer und durch eine dritte Brennstoffvorwärmstufe Speisewasser aus einem Hochdruckspeisewasservorwärmer, werden die einzelnen Temperatur- und Druckzustände des Speisewassers besonders vorteilhaft ausgenutzt und die einzelnen Brennstoffvorwärmstufen sind jeweils nur auf die Anforderungen einer Stufe auszurichten, wodurch Kosten eingespart werden können (modularer Aufbau).

In den Figuren werden Ausführungsbeispiele der Erfindung gegeben. Es zeigen:
- Fig. 1:: eine schematische Darstellung einer Gas- und Dampfturbinenanlage,
- Fig.2:: eine Brennstoffvorwärmstufe,
- Fig.3a:: zwei Brennstoffvorwärmstufen,
- Fig.3b:: ein Detail der Wasser-/Dampftrennvorrichtung,
- Fig.3c:: zwei Brennstoffvorwärmstufen mit alternativer Leitungsführung,
- Fig.4:: zwei Brennstoffvorwärmstufen, und
- Fig.5:: drei Brennstoffvorwärmstufen.

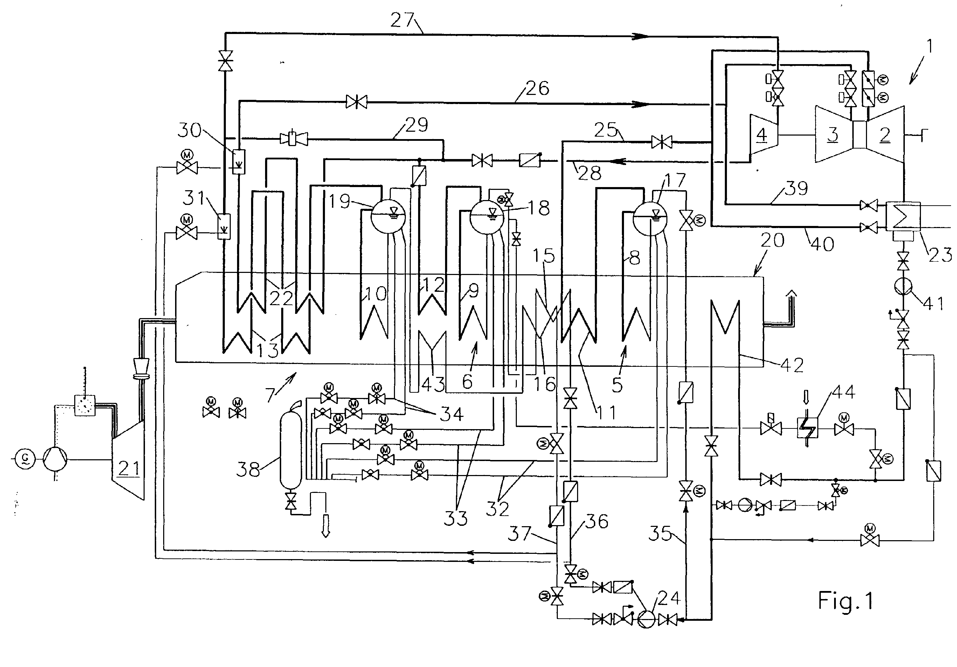

Die Figur 1 zeigt in einer schematischen Darstellung eine Gas- und Dampfturbinenanlage. Die Dampfturbine 1 ist aus drei Turbinenstufen 2,3,4 aufgebaut, nämlich einer Niederdruckdampfstufe 2, einer Mitteldruckdampfstufe 3 und einer Hochdruckdampfstufe 4. Die Versorgung der Turbinenstufen 2,3,4 mit Dampf erfolgt durch drei Dampferzeuger 5,6,7, nämlich einem Niederdruckdampferzeuger 5, einem Mitteldruckdampferzeuger 6 und einem Hochdruckdampferzeuger 7.

Die Dampferzeuger 5, 6, 7 sind prinzipiell ähnlich aufgebaut. Die Dampferzeuger 5, 6, 7 bestehen jeweils aus einem Verdampfer 8, 9, 10, einem Überhitzer 11, 12, 13, einem Kondensatvorwärmer 42 oder einem Speisewasservorwärmer 15, 16 und einer Trommel 17, 18, 19, in der sich Speisewasserkondensat und Speisewasserdampf sammelt, sowie einer Wärmequelle 20, die im vorliegenden Fall durch Abgase einer Gasturbine 21 gespeist wird.

Das Speisewasser wird zunächst in einem Kondensatvorwärmer 42 vorgewärmt. Danach wird ein Teil des Speisewassers abgezweigt und durch eine Niederdruckspeisewasserzuleitung 35 zu einer Niederdrucktrommel 17 geführt. Ein anderer Teil des Speisewassers wird von einer Speisewasserpumpe 24 über eine Mitteldruckspeisewasserzuleitung 36 zu einer Mitteldrucktrommel 18 und über eine Hochdruckspeisewasserzuleitung 37 zu einer Hochdrucktrommel 19 geführt. Von den Trommeln 17, 18, 19 aus wird aus dem Speisewasser zunächst im Niederdruckverdampfer 8, im Mitteldruckverdampfer 9 bzw. im Hochdruckverdampfer 10 Sattdampf erzeugt. Daran schließt sich dann im Niederdruckdampferzeuger 5 der Niederdrucküberhitzer 11 an, in dem der Sattdampf auf die gewünschte Überhitzungstemperatur erwärmt wird. Von dem Niederdrucküberhitzer 11 aus führt eine Niederdruckturbinenzuleitung 25 den Dampf zur Niederdruckturbinenstufe 2 oder bei Umleitungsbetrieb durch eine Niederdruckdampfumleitung 40 in einen Turbinenkondensator 23, in dem der Dampf wieder kondensiert wird und mittels einer Kondensatpumpe 41 zum Kondensatvorwärmer 42 geleitet wird. Im Mitteldruckdampferzeuger 6 wird das Speisewasser zunächst im Mitteldruckspeisewasservorwärmer 15 erwärmt, anschließend im Mitteldruckverdampfer 9 Sattdampf erzeugt, der dann zum Mitteldrucküberhitzer 12 geleitet wird. Der überhitzte Dampf wird anschließend in eine Hochdruckturbinenableitung 28 eingespeist, die aus dem Hochdruckturbinenteil 4 ausgetretenen Dampf führt, der dann zusammen mit dem Mitteldruckdampf in einem Mitteldruckzwischenüberhitzer 22 weiter überhitzt wird und anschließend über eine Mitteldruckturbinenzuleitung 26 zu der Mitteldruckdampfstufe 3 der Dampfturbine 1 geleitet wird. Alternativ kann der Mitteldruckdampf über eine Mitteldruckdampfumleitung 39 dem Turbinenkondensator 23 zugeführt werden. Das dem Hochdruckdampferzeuger 7 zugeführte Speisewasser wird zunächst in einem Hochdruckspeisewasservorwärmer 16 und danach in einem weiteren Hochdruckspeisewasservorwärmer 43 erwärmt. Der im Hochdruckverdampfer 10 erzeugte Sattdampf wird in den zwei Stufen des Hochdrucküberhitzers 13 überhitzt und über eine Hochdruckturbinenzuleitung 27 der Hochdruckdampfstufe 4 der Dampfturbine 1 zugeführt. Eine alternative Dampfleitung kann über die Hochdruckdampfumleitung 29 erfolgen, die die Hochdruckturbinenzuleitung 29 mit der Hochdruckturbinenableitung 28 verbindet. Aus allen Trommeln 17,18,19 kann Trommelwasser über Niederdrucktrommelableitungen 32, Mitteldrucktrommelableitungen 33 bzw. Hochdrucktrommelableitungen 34 in einen gemeinsamen Tank 38 abgeführt werden. Zudem kann der überhitzte Mitteldruckdampf und der überhitzte Hochdruckdampf in jeweils einen in die Mitteldruckturbinenzuleitung 26 bzw. die Hochdruckturbinenzuleitung 27 eingebauten Mitteldruckdampfenthitzer 30 bzw. Hochdruckdampfenthitzer 31 (Einspritzkühler) durch Zuführung von nach der Speisewasserpumpe entnommenem Speisewasser abgekühlt werden.

Zudem sind in die meisten Leitungen elektrische Ventile oder Klappen eingebaut, so daß die Dampf- und Speisewasserflüsse gesteuert werden können.

Für die Erzeugung der Gase zum Betrieb der Gasturbine 21 wird Brennstoff, z.B. Erdgas oder Heizöl, benötigt. Zur Brennstoffvorwärmung wird im Stand der Technik, wie in Figur 1 dargestellt, erhitztes Speisewasser aus dem Mitteldruckdampferzeuger 6 verwendet. Das Speisewasser wird nach der Vorwärmung im Mitteldruckspeisewasservorwärmer 15 zu einem Brennstoffvorwärmer 44 geleitet. Im Brennstoffvorwärmer 44 wird im Wärmetauscherprinzip im Gegenstrom die Wärmeenergie vom Speisewasser auf den Brennstoff übertragen. Anschließend wird das abgekühlte Speisewasser vor dem Kondensatvorwärmer 42 wieder in den Speisewasserkreislauf eingespeist. Bei der Brennstofferwärmung wird das Speisewasser auf 60-80 °C abgekühlt, während der Brennstoff auf bis zu 200 °C erwärmt wird. Diese hohe Vorwärmung kann nicht immer ausgenutzt werden, da bei höherer Vorwärmung des Brennstoffs Probleme wie beispielsweise das sogenannte "Brennkammerbrummen" bei der Verbrennung in der Brennkammer der Gasturbine 21 auftreten kann.

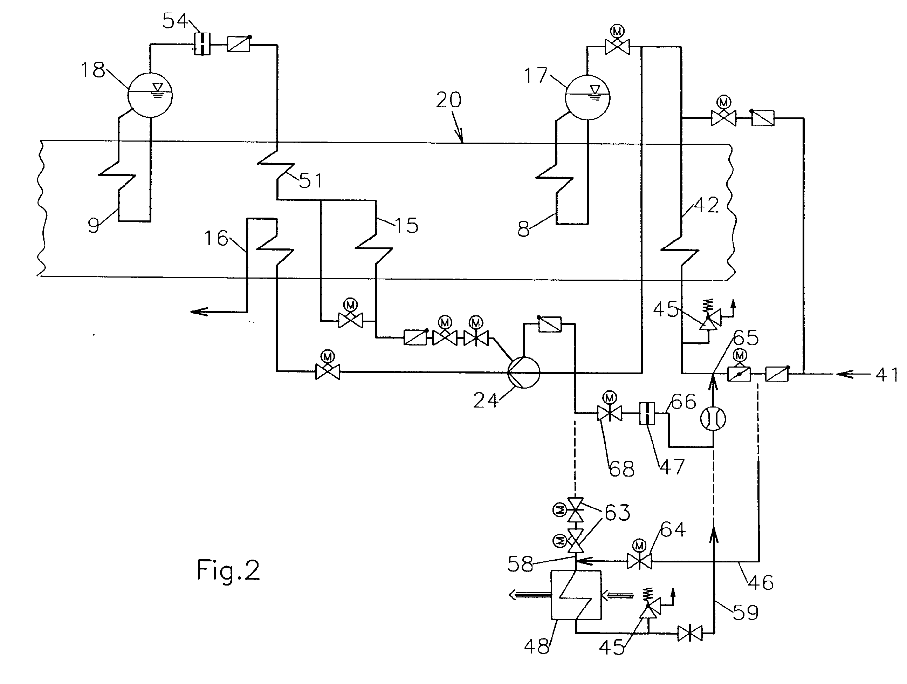

Figur 2 zeigt eine erfindungsgemäße Brennstoffvorwärmstufe 48. Durch eine Niederdruckspeisewasserzuleitung 58, die ND-Speisewasser aus einer Anzapfung der HD-Speisepumpe entnimmt, wird das durch den Kondensatvorwärmer 42 erwärmte Speisewasser zur Brennstoffvorwärmstufe 48 geleitet. Nach dem Aufheizen des Brennstoffs im Wärmetauscher in der Brennstoffvorwärmstufe 48 wird das Speisewasser durch eine Niederdruckspeisewasserableitung 59 vor dem Kondensatvorwärmer 42 eingeleitet. In der Niederdruckspeisewasserzuleitung 58 sind Ventile 63 mit elektronischem Stellantrieb vorgesehen, um den Durchlauf des Speisewassers absperren bzw. einstellen zu können. Zur Sicherung gegen Zerstörung durch Überdruck ist ein Überdruckventil 45 vorgesehen. Zum schonenden Anfahren mit einem geringeren Temperaturgradienten ist eine Zumischleitung 46 vorgesehen. Die Zumischleitung 46 beginnt vor dem Kondensatvorwärmer 42 noch vor der Einleitstelle 65 des zur Brennstoffvorwärmung abgekühlten Speisewassers. Sie endet vor der Brennstoffvorwärmstufe 48 und weist ein regelbares Ventil 64 auf. Zudem ist die gesamte Brennstoffvorwärmstufe 48 mitsamt der Niederdruckspeisewasserzuleitung 58, der Niederdruckspeisewasserableitung 59 und der Zumischleitung 46 als Nachrüstsystem vorgesehen, so daß es bei Bedarf eingesetzt werden kann. Parallel zu der Niederdruckspeisewasserzuleitung 58 und der Niederdruckspeisewasserableitung 59 und der Brennstoffvorwärmstufe 48 verläuft eine Speisewasserparallelleitung 66 von der Speisewasserpumpe 24 bis vor den Kondensatvorwärmer 42. In dieser Speisewasserparallelleitung 66 ist neben einem weiteren Ventil 68 eine Drosselblende 47 eingerichtet, mit deren Hilfe der höhere Speisewasserdruck (bei umführtem Brennstoffvorwärmer) auf das Niveau des Kondensatsystems abgebaut wird.

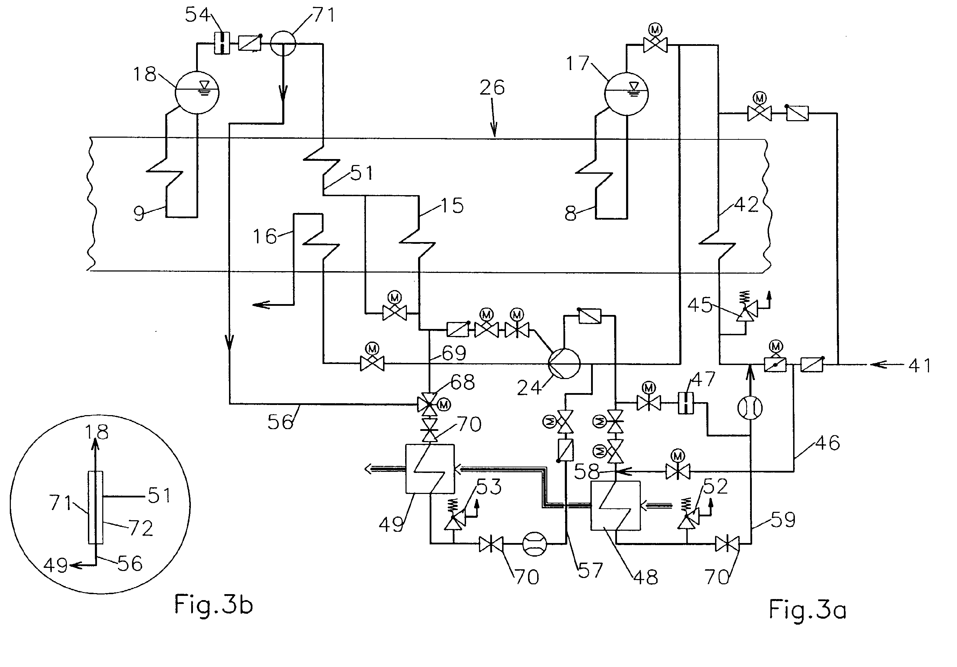

Figur 3a zeigt einen Ausschnitt aus einem Schaltschema einer Gas- und Dampfturbinenanlage mit zwei Brennstoffvorwärmstufen 48, 49. Die Niederdruckbrennstoffvorwärmstufe 48 ist wie in Figur 2 beschrieben angesetzt. Der in der Brennstoffvorwärmstufe 49 aufgeheizte Brennstoff wird anschließend zu einer zweiten Brennstoffvorwärmstufe, der Mitteldruckvorwärmstufe 49 geschickt. Diese wird durch eine Mitteldruckspeisewasserzuleitung 56 mit Speisewasser versorgt, das nach dem Mitteldruckspeisewasservorwärmer 15, 51 entnommen wird. Der Mitteldruckspeisewasservorwärmer 15, 51 ist dabei aus zwei in Reihe geschalteten Teilen 15 und 51 aufgebaut. Durch Einleitung von kühlerem Speisewasser vor dem zweiten Mitteldruckspeisewasservorwärmer 51, welches vor dem ersten Mitteldruckspeisewasservorwärmer 15 entnommen wird, wird ein Ausdampfen im zweiten Mitteldruckspeisewasservorwärmer 51 verhindert. Dies kann insbesondere bei geringerem Durchfluß relevant werden, beispielsweise, wenn die Mitteldruckbrennstoffvorwärmstufe 49 nicht in Betrieb ist. Zwischen der Mitteldrucktrommel 18 und dem Ansatz der Mitteldruckspeisewasserzuleitung 56 ist eine Drosselblende 54 vorgesehen. Ziel dieser Vorrichtung ist es, Ausdampfungen im Mitteldruckvorwärmer 51 durch Druckanstau bei Dampfbildung zu vermeiden. Weiterhin gibt es einen Dampfblasenseparator 71, dessen Funktionsweise in der Detaildarstellung in Figur 3b näher erläutert wird. Vor der Brennstoffvorwärmstufe 49 ist über ein Dreiwegeventil 68 die Zuleitung von kälterem Speisewasser über eine vor dem Mitteldruckspeisewasservorwärmer 15 mündende Zuleitung 69 zum schonenden Anfahren möglich. Die Ableitung des abgekühlten Speisewassers nach der Brennstoffvorwärmstufe 49 erfolgt über eine Mitteldruckspeisewasserableitung 57, die vor der Speisewasserpumpe 24 mündet. Diese Mitteldruckspeisewasserableitung 57 weist ein Überdruckventil 53 zur Absicherung Drucküberschreitung auf. Die Druckauslegung muß lediglich auf Kondensatvorwärmdruck erfolgen beispielsweise auf 25-30 bar. Falls keine Brennstoffvorwärmung erwünscht ist, können die Speisewasserzuleitungen zu den Brennstoffvorwärmstufen 48, 49 bedarfsweise mittels mehrerer Ventile 70 abgesperrt werden.

Figur 3b zeigt eine Detaildarstellung des Dampfblasenseparators 71. Ausdampfungen können beispielsweise dadurch entstehen, daß Speisewasser zu stark an Dampf übersättigt ist, wenn z.B. die Speisewassertemperatur oder der Druck sinkt. Durch den Dampfblasenseparator 71 wird die Strömung des vom Mitteldruckspeisewasservorwärmer 51 heranströmende Speisewasser verlangsamt und eventuell vorhandene Dampfblasen steigen vertikal nach oben, von wo aus sie dann zur Mitteldrucktrommel 18 mitgerissen werden. Das Speisewasser ohne Blasen sammelt sich im unteren Dampfblasenseparatorteil 72 und wird hier über die Mitteldruckspeisewasserzuleitung 56 zur Brennstoffvorwärmstufe 49 abgezogen.

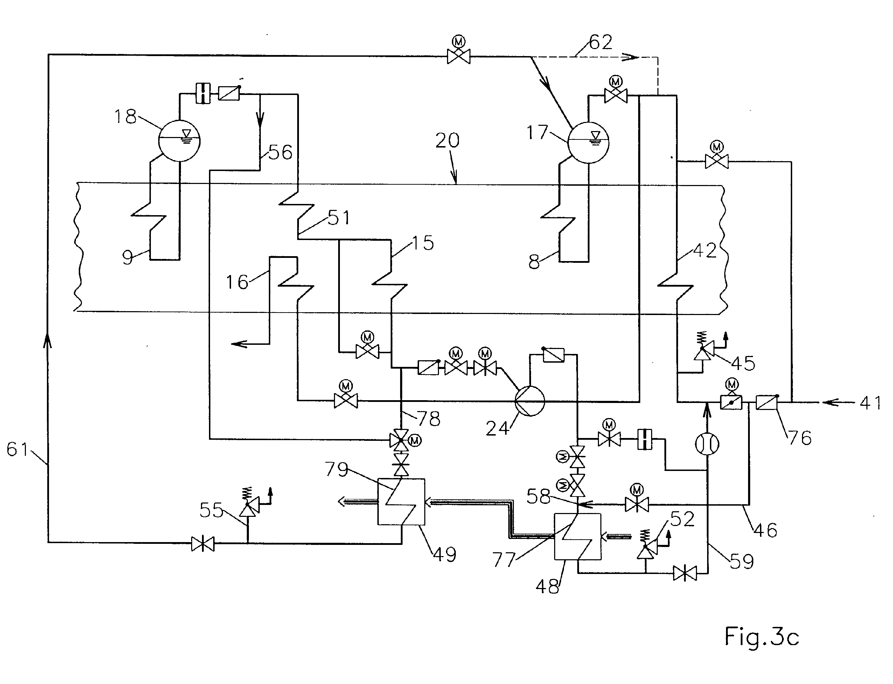

Figur 3c zeigt einen Ausschnitt aus einem Schaltschema einer Gas- und Dampfturbinenanlage mit zwei Brennstoffvorwärmstufen 48, 49. Die erste Brennstoffvorwärmstufe 48 entspricht der in Figur 3a. Die Mitteldruckspeisewasserableitung 61/62 der zweiten Brennstoffvorwärmstufe 49 verläuft zur Niederdrucktrommel 17. Auf diese Weise ergeben sich geringere Ausdampfprobleme, weil das Speisewasser noch recht heiß ist.

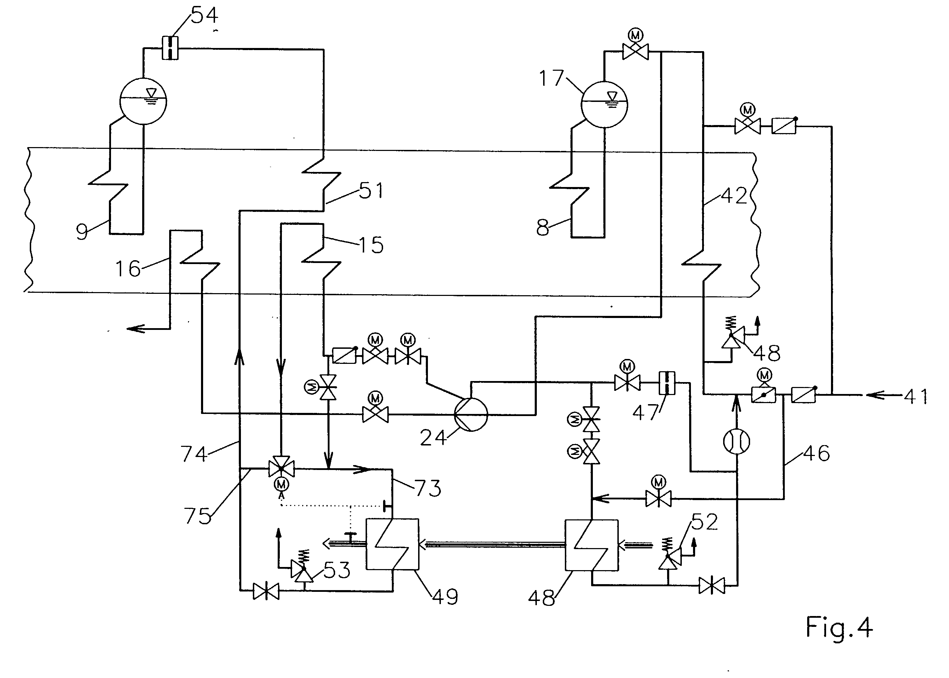

Figur 4 zeigt einen Ausschnitt aus einem Schaltschema einer Gas- und Dampfturbinenanlage mit zwei Brennstoffvorwärmstufen 48, 49. Der Mitteldruckspeisewasservorwärmer ist aus zwei Teilen 15, 51 aufgebaut, die zum Abgas parallel geschaltet sind. Die Brennstoffvorwärmstufe 49 ist zwischen die Teile 15, 51 des Mitteldruckspeisewasservorwärmers geschaltet, wobei die Speisewasserzuleitung 73 von einem Ausgang des ersten Teils 15 des Speisewasservorwärmers zur Brennstoffvorwärmstufe 49 und die Speisewasserableitung 74 von der Brennstoffvorwärmstufe 49 zu einem Eingang des zweiten Teils 51 des Speisewasservorwärmers führt. Parallel zur Brennstoffvorwärmstufe 49 ist es eine Bypassleitung 75 vorgesehen, durch die das Speisewasser geleitet werden kann, sofern es nicht durch die Brennstoffvorwärmstufe 49 fließen soll.

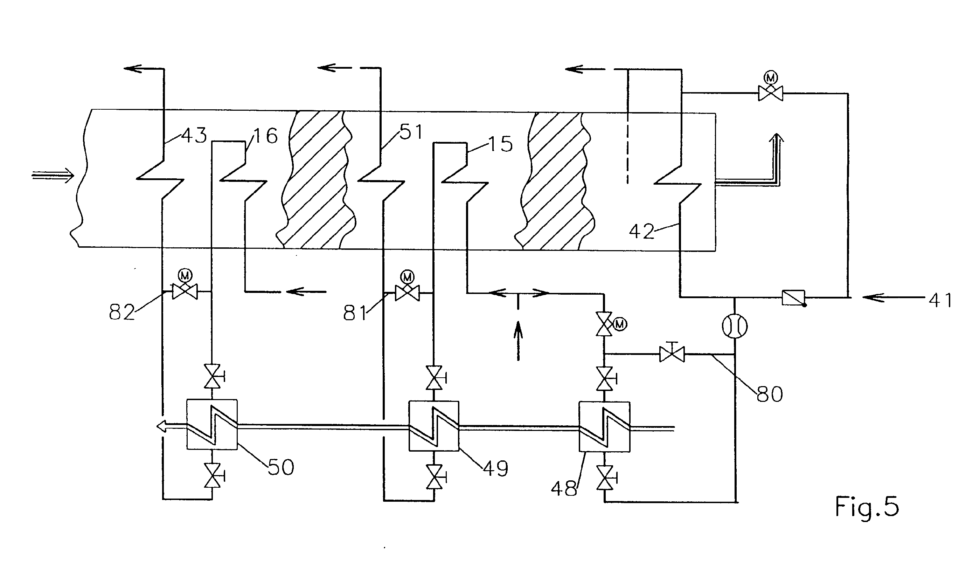

Figur 5 zeigt einen Ausschnitt aus einem Schaltschema einer Gas- und Dampfturbinenanlage mit drei Brennstoff vorwärmstufen 48, 49, 50. Die erste Brennstoffvorwärmstufe 48 wird gespeist durch Speisewasser aus dem Bereich vor dem Mitteldruckspeisewasservorwärmer 15. Die zweite Brennstoffvorwärmstufe 49 ist zwischen die beiden Teile 15 und 51 des Mitteldruckspeisewasservorwärmers geschaltet und die dritte Brennstoffvorwärmstufe 50 zwischen die beiden Teile 16 und 43 des Hochdruckspeisewasservorwärmers. Der Brennstoff wird dabei in der ersten Stufe 48 auf ca. 130-150 °C aufgeheizt. In der zweiten Stufe 49 auf 200-220°C und in der dritten Stufe 50 auf ca. 300 °C. Die Brennstoffvorwärmer sind jeweils durch Speisewasserleitungen 80, 81, 82 überbrückbar und können somit umführt werden, falls dies erforderlich ist.

## Patentansprüche

1. Vorrichtung zur Brennstoffvorwärmung in kombinierten Gas- und Dampfturbinenanlagen, mit zumindest einem Dampferzeuger (5, 6, 7) zu Erwärmung, Verdampfung und Überhitzung von Speisewasser, der einen Speisewasservorwärmer (15, 16, 43, 51), einen Verdampfer (8, 9, 10) und einen Überhitzer (11, 12, 13) aufweist, wobei zumindest ein Teil des erhitzten Speisewassers zur Vorwärmung von Brennstoff in einem Brennstoffvorwärmer einsetzbar ist, der durch eine Speisewasserzuleitung (35, 36, 37, 56, 58, 60, 73) mit Speisewasser mit einer vorbestimmten Temperatur versorgbar ist, und nach dem Erwärmen des Brennstoffs das abgekühlte Speisewasser mittels einer Speisewasserableitung (57, 59, 61, 74) ableitbar ist, **dadurch gekennzeichnet, daß** die Brennstoffvorwärmung in bedarfsweise einzeln zuschaltbaren Brennstoffvorwärmstufen (48, 49, 50) erfolgt, durch die der Brennstoff nacheinander leitbar ist.

2. Vorrichtung nach Anspruch 1,
**dadurch gekennzeichnet, daß** der Speisewasservorwärmer aus zwei Teilen (15, 51) aufgebaut ist, die zum Abgas parallel geschaltet sind und die Brennstoffvorwärmstufe (49) zwischen die Teile geschaltet ist, wobei die Speisewasserzuleitung (73) von einem Ausgang des ersten Teils (15) des Speisewasservorwärmers zur Brennstoffvorwärmstufe (49) und die Speisewasserableitung (74) von der Brennstoffvorwärmstufe (49) zu einem Eingang des zweiten Teils (51) des Speisewasservorwärmers führt.

3. Vorrichtung nach Anspruch 1 oder 2,
**dadurch gekennzeichnet,daß** eine Brennstoffvorwärmstufe (48, 49, 50) einem Kondensatvorwärmer (42) oder einem Mitteldruckspeisewasservorwärmer (15) oder einem Hochdruckspeisewasservorwärmer (16) zugeordnet ist.

4. Vorrichtung nach einem der Ansprüche 1 bis 3,
**dadurch gekennzeichnet,daß** drei Brennstoffvorwärmstufen (48, 49, 50) vorgesehen sind, wobei eine erste Brennstoffvorwärmstufe (49) einem Kondensatvorwärmer (42), eine zweite Brennstoffvorwärmstufe (49) einem Mitteldruckspeisewasservorwärmer (15, 51) und eine dritte Brennstoffvorwärmstufe (50) einem Hochdruckspeisewasservorwärmer (16, 43) zugeordnet ist.

5. Vorrichtung nach einem der Ansprüche 1 bis 4,
**dadurch gekennzeichnet,daß** die Speisewasserzuleitung (58) einer Brennstoffvorwärmstufe (48) an der Speisewasserpumpe (24) nach dem Kondensatvorwärmer (42) angesetzt ist und die Speisewasserableitung (59) der Brennstoffvorwärmstufe (48) vor den Kondensatvorwärmer (42) führt.

6. Vorrichtung nach einem der Ansprüche 1 bis 5,
**dadurch gekennzeichnet,daß** die Speisewasserzuleitung (56) einer Brennstoffvorwärmstufe (49) nach einem Speisewasservorwärmer (15, 51) angesetzt ist und die Speisewasserableitung (57) der Brennstoffvorwärmstufe (49) vor die Speisewasserpumpe (24) führt.

7. Vorrichtung nach einem der Ansprüche 1 bis 6,
**dadurch gekennzeichnet, daß** die Speisewasserzuleitung (56) einer Brennstoffvorwärmstufe (49) zwischen Mitteldrucktrommel (18) und Mitteldruckspeisewasservorwärmer (15, 51) angesetzt ist und die Speisewasserableitung (60) der Brennstoffvorwärmstufe (49) an die Niederdrucktrommel (17) führt.

8. Vorrichtung nach einem der Ansprüche 1 bis 7,
**dadurch gekennzeichnet, daß** die Speisewasserzuleitung (56) einer Brennstoffvorwärmstufe (49) zwischen Mitteldrucktrommel (18) und Mitteldruckspeisewasservorwärmer (15, 51) angesetzt ist und die Speisewasserableitung (60) der Brennstoffvorwärmstufe (49) zwischen Kondensatvorwärmer (42) und Niederdrucktrommel (18) angesetzt ist.

9. Vorrichtung nach einem der Ansprüche 1 bis 8,
**dadurch gekennzeichnet, daß** die erste (48) und/oder die zweite (49) und/oder die dritte Brennstoffvorwärmstufe (50) jeweils zwischen zwei Teilen des Kondensatwasservorwärmers (42) und/oder den beiden Teilen (15, 51) des Mitteldruckspeisewasservorwärmers und/oder den beiden Teilen (16, 43) des Hochdruckspeisewasservorwärmers geschaltet sind.

10. Vorrichtung nach einem der Ansprüche 1 bis 9,
**dadurch gekennzeichnet, daß** eine Zumischleitung (46) beginnend zwischen der Kondensatpumpe (41) und einer Absperrklappe (76) zum Einlaß (77) des Speisewassers in die Brennstoffvorwärmstufe (48) führt.

11. Vorrichtung nach einem der Ansprüche 1 bis 10,
**dadurch gekennzeichnet, daß** eine Zumischleitung (78) an einem Einlaß (79) der Brennstoffvorwärmstufe (49) mit einer Mitteldruckspeisewasserzuleitung (56) angesetzt ist, wobei die Zumischleitung (78) zwischen Speisepumpe (24) und Mitteldruckspeisewasservorwärmer (15) beginnt.

12. Verfahren zur Brennstoffvorwärmung in kombinierten Gas- und Dampfturbinenanlagen, insbesondere mit Hilfe einer Vorrichtung nach einem der Ansprüche 1 bis 11, wobei Speisewasser in zumindest einem Dampferzeuger (5, 6, 7) in Kondensatvorwärmer (42) erwärmt, in einem Verdampfer (8, 9, 10) verdampft und in einem Überhitzer (11, 12, 13) überhitzt wird, wobei zumindest ein Teil des erhitzten Speisewassers zur Vorwärmung von Brennstoff in einem Brennstoffvorwärmer eingesetzt wird, der durch eine Speisewasserzuleitung (35, 36, 37, 56, 58, 60, 73) mit Speisewasser mit einer vorbestimmten Temperatur versorgt wird, und nach dem Erwärmen des Brennstoffs das abgekühlte Speisewasser mittels jeweils einer Speisewasserableitung (57, 59, 61, 74) abgeleitet wird,
**dadurch gekennzeichnet, daß** die Brennstoffvorwärmung in bedarfsweise einzeln zuschaltbaren Brennstoffvorwärmstufen (48, 49, 50) erfolgt, durch die der Brennstoff nacheinander geleitet wird.

13. Verfahren nach Anspruch 12,
**dadurch gekennzeichnet, daß** das Speisewasser zunächst durch einen Teil (15) des Speisewasservorwärmers geleitet wird, anschließend durch eine Speisewasserzuleitung (73) zur Brennstoffvorwärmstufe (49), durch eine Speisewasserableitung (74) und durch einen zweiten Teil (51) des Speisewasservorwärmers, wobei die beiden Teile (15, 51) zum Abgas parallel geschaltet sind.

14. Verfahren nach Anspruch 12 oder 13,
**dadurch gekennzeichnet, daß** durch eine erste Brennstoffvorwärmstufen (48) Speisewasser aus einem Kondensatvorwärmer (42) geleitet wird, durch eine zweite Brennstoffvorwärmstufe (49) Speisewasser aus einem Mitteldruckspeisewasservorwärmer (15, 51) und durch eine dritte Brennstoffvorwärmstufe (50) Speisewasser aus einem Hochdruckspeisewasservorwärmer (16, 43).
